# EUROPEAN PATENT APPLICATION

(11) **EP 4 513 150 A1**
(43) Date of publication of application: **26.02.2025**
(21) Application number: 24194934.6
(22) Date of filing: 16.08.2024
(51) Int. Cl.: G01F 15/00, G01F 15/063, G01F 15/075, G01F 15/18, A01G 25/16

(54) **GARDEN WATERING FLOW METERS**

(30) Priority: 22.08.2023 GB 202312824
(71) Applicant: Exel Industries, 51200 Epernay (FR)
(72) Inventor: BALLU, Marc, 51200 Epernay (FR); IACIOFANO, Nick, Birmingham, B76 1AB (GB)
(74) Representative: Cleveland Scott York

(57) **Abstract**

A garden watering flow meter 2 comprising an inlet 21a for accepting water, an outlet 21b for outputting water, a flow communication path 22 between the inlet and the outlet, and a flow sensor 26 for sensing flow into, in, or out of, the flow communication path 22. The flow meter 2 further comprises a control arrangement 23, 24, 25 for controlling the flow between the inlet 21a and the outlet 21b. The control arrangement comprises a valve 23 moveable between an open state which allows flow in the a flow communication path 22 between the inlet 21a and the outlet 22a and a closed state which obstructs flow between the inlet 21a and the outlet 22a, a drive arrangement 24 for driving the valve 23 between the open and closed states, and a control unit 25 for controlling operation of the drive arrangement in dependence on an output from the flow sensor 26.

## Description

This invention relates to garden watering flow meters.

Garden watering flow meters are used in home watering arrangements so as to provide an indication of the amount of water delivered via a particular watering device such as a sprinkler.

These provide useful information on water usage but there is a limit to their effectiveness at saving water since they only inform a user of instantaneous actual flow or accumulated flow, without necessarily influencing water usage.

Thus it would be desirable to provide devices which may provide enhanced water saving options.

According to a first aspect of the present invention there is provided a garden watering flow meter comprising an inlet for accepting water, an outlet for outputting water, a flow communication path between the inlet and the outlet, and a flow sensor for sensing flow into, in, or out of, the flow communication path, wherein the flow meter further comprises a control arrangement for controlling the flow between the inlet and the outlet, the control arrangement comprising a valve moveable between an open state which allows flow in the a flow communication path between the inlet and the outlet and a closed state which obstructs flow between the inlet and the outlet, a drive arrangement for driving the valve between the open and closed states, and a control unit for controlling operation of the drive arrangement in dependence on an output from the flow sensor.

This can allow delivery of water to be controlled in dependence on the amount and/or level of flow detected through the flow meter.

The control arrangement may be arranged to determine, using an output of the flow sensor, a volume of fluid, typically water, delivered by the flow meter.

The control arrangement may be arranged to control operation of the drive arrangement in dependence on a volume of fluid delivered by the flow meter as determined by the controller arrangement using the flow sensor.

The control unit may be arranged to accept an input defining a user selected volume of fluid for delivery.

The control unit may be arranged to determine a volume of fluid delivered by the flow meter after a start point and cause the drive arrangement to drive the valve to the closed state when the determined volume of fluid delivered reaches or exceeds the user selected volume of fluid as specified by the accepted input.

This can provide a definite visibility and control over the amount of water delivered to better enhance water saving and well as improve the efficiency of water usage.

The start point may be defined by movement of the valve to the open position.

The start point may be defined by receipt of a start input at the control unit.

In some embodiments the garden watering flow meter may comprise a manually operably control, such as a button, usable by a user to provide a start input to the control unit.

The flow meter may be arranged so that receipt of a start input, when the valve is closed, causes opening of the valve to begin delivery of water through the flow meter.

In such cases, on the other hand, if the valve is open when a start input is received, receipt of a start input may leave the valve in the open state and reset measurement of the volume of water delivered.

In some such cases, the manually operably control might also function as an "on-off" control.

In some embodiments the garden watering flow meter may comprise a manually operably control, moveable between a plurality of positions, such as a dial or knob, and usable by a user to provide a selected volume of fluid for delivery input to the control unit, with each of the plurality of positions corresponding to a respective selected volume of fluid for delivery.

The units of volume indicated for selection by a user may be presented in terms of traditional units of volume such as Litres or Gallons, or in some cases in more intuitive forms - say indicating a number of watering cans.

Each of the plurality of positions may correspond to a respective number of water cans fluid for delivery.

The garden watering flow meter may comprise a display screen for indicating information to a user. The display screen may also be arranged to accept user input.

The control unit may be arranged to accept an input defining a user selected volume of fluid for delivery received via the display screen.

The display screen may be arranged to display and accept an input defining respective numbers of water cans fluid for delivery.

The control unit may be arranged to accept a start input received via the display screen.

The display screen may be arranged to indicate one or more of:
instantaneous flow;
accumulated usage (ie volume) on each use; and
use (ie volume) to date.

The garden water flow meter may be arranged to accept a reset input arranged to restart the water delivery process if required. A reset control may be provided to allow the generation of a reset input. The reset control might comprise a manual control, such as a button, provided on the device. The reset control might be provided on the display screen.

The control arrangement may be arranged to control operation of the drive arrangement in dependence on a flow rate determined by the controller arrangement using the flow sensor and may be arranged to delay moving the valve to the open state and/or to move the valve from the open state to the closed state if the determined flow rate is below a predetermined threshold level.

This can facilitate the staggering or delaying of water delivery to a more suitable time - ie when a greater flow rate is available.

In some embodiments the garden watering flow meter may comprise a communication module for allowing communication between the controller and a separate device. The communications module may typically be a wireless communication module facilitating wireless communication with the garden flow meter.

The communication module may comprise a transceiver and the communication module may comprise an antenna.

The communication module may be arranged for communication with a hub and onwards to a network which is connected or connectable to the internet. In alternative or addition the communication module may be arranged for communication with a local remote control unit. In alternative or addition the communication module may be arranged for communication directly via a public mobile telephone network - say a 4G or 5G network.

The control unit may be arranged to accept an input defining a user selected volume of fluid for delivery received via the communication module.

The control unit may be arranged to accept a start input received via the communication module.

The control unit may be arranged to accept a reset input received via the communication module.

The control unit may be arranged to accept a delayed watering input received via the communication module. This may be used to delay opening of the valve or cause closing of the valve in suitable circumstances.

The garden watering flow meter may be arranged to be tap mountable. The garden watering flow meter may be a tap mountable garden watering flow meter.

In such a case the garden watering flow meter may comprise a first connector portion which is arranged for mounting on a tap and a second connector portion which is arranged to accept a hose end. In such a case, the hose end may be accepted at the garden watering flow meter directly or via a hose fitting.

The garden watering flow meter may be arranged to be connectable in-line - ie between two lengths of hose. The garden watering flow meter may be an in-line garden watering flow meter. The garden watering flow meter may comprise a pair of hose connector portions.

The garden watering flow meter may be arranged as a hose end component for provision at the end of a hose and which comprises a hose connector portion on which a hose is mountable.

The garden watering flow meter may be arranged as a hose fitting which comprises a hose connector portion on which a hose is mountable and a connector mounting portion for accepting a connector portion of a component to be connected to the hose fitting.

In any of the above cases, the or each hose connection portion may comprise: a hose receiving portion in which is disposed a spigot for receiving the end of a length of hose; and
a clamping arrangement comprising a locking nut and a plurality of deformable claws which surround the spigot and are arranged to be driven into contact with hose carried on the spigot under action of the locking nut such that a carried hose is clampable between the claws and the spigot.

The connector mounting portion may comprise part of a push fit connector system for accepting and retaining a part of the connector portion of a component to be connected to the hose fitting. The connector mounting portion may comprise the female part of push fit connector system, such as a "quick-connect" system widely used in Europe and elsewhere, for accepting a corresponding male part on another component.

In a quick-connect connection system, one part is a male part and carries at least one O-ring seal, the other part is female and includes a bore arranged to accept the male part with the O-ring seal sealing against a wall of the bore. The female part further comprises a plurality of engaging fingers arranged to move resiliently between an extended position for capturing the male part and a retracted position allowing insertion and removal of the male part in the receiving bore. As the male part is introduced into the receiving bore the engaging fingers are driven into the retracted position and return to the extended position once the two parts are fully engaged. A release mechanism is provided for releasing the two parts. When operated this retracts the engaging fingers so that the male part may be removed.

The present fitting may comprise the female parts of a quick-connect connection system - ie at least one of:
a bore arranged to accept the male part;
a plurality of engaging fingers arranged to move resiliently between an extended position for capturing the male part and a retracted position allowing insertion and removal of the male part in the receiving bore; and
a release mechanism for releasing the two parts, which when operated retracts the engaging fingers so that the male part may be removed.

In alternatives the connector mounting portion may comprise a threaded connector portion for connection with a corresponding threaded connector portion on another component. Such a system is more commonly used, for example, in the US.

According to a second aspect of the present invention there is provided a garden watering flow meter arrangement comprising a garden watering flow meter as defined above and a hub which is on the one hand connectable to an external network and on the other hand arranged for wireless communication with the garden watering flow meter.

According to a third aspect of the present invention there is provided a garden watering flow meter system comprising:
a garden watering flow meter as defined above;
a client device arranged under the control of software for communication via a network with the garden watering flow meter and for accepting user inputs which cause control of the garden watering flow meter.

The garden watering flow meter system may comprise a hub which is on the one hand connectable to an external network and on the other hand arranged for wireless communication with the garden watering flow meter.

According to a fourth aspect of the present invention there is provided a client device arranged under the control of software for communication via a network with a garden watering flow meter as defined above and for accepting user inputs which cause control of the garden watering flow meter.

The client device may be arranged to accept user inputs for indicating a volume of water to delivered through the flow meter.

The units of volume indicated for selection by a user may be presented in terms of traditional units of volume such as Litres or Gallons, or in some cases in more intuitive forms - say indicating a number of watering cans.

The client device may be arranged under the control of software to display and accept an input defining respective numbers of water cans fluid for delivery by the flow meter.

The client device may be arranged to accept a user start input for delivery to the garden watering flow meter for at least one of:
i) defining a start point for measuring a volume of water delivered through the flow meter; and
ii) starting water delivery through the flow meter.

The client device may be arranged to accept user reset input for delivery to the garden watering flow meter and arranged to restart the water delivery process if required.

The client device may be arranged under control of software to indicate to a user a volume of water delivered through the flow meter.

The client device may be arranged under the control of software to indicate to a user a volume of water delivered through the flow meter since a start point.

The client device may be arranged under the control of software to indicate to a user a volume of water delivered through the flow meter in a predetermined period - such as a day, week, month, or year.

The client device may be arranged under the control of software to accept an input indicating a unit cost of water and to indicate to a user a cost of water delivered through the flow meter. This may, for example, be since a start point or in a predetermined period - such as a day, week, month, or year.

The client device may be arranged under the control of software to receive data from the flow meter for display to the user via the client device. The client device may be arranged under the control of software to send control signals to the flow meter for controlling operation of the flow meter based on user input received at the client device.

According to a fifth aspect of the present invention there is provided a computer program comprising code portions which when loaded and run on a computer cause the computer to operate as a client device as defined above.

According to an sixth aspect of the present invention there is provided a machine readable data carrier, say a computer program product, carrying a computer program as defined in the fifth aspect of the present invention.

According to a seventh aspect of the present invention there is provided a method of operating a client device arranged under the control of software for controlling a garden watering flow meter, comprising the steps of:
communicating via a network with a garden watering flow meter as defined above;
accepting user inputs at the client device which cause control of the garden watering flow meter; and
sending programming data signals to the garden watering flow meter.

According to a seventh aspect of the present invention there is provided a garden watering flow meter system comprising:
a first garden watering flow meter as defined above;
and at least one of:
   i) at least one further garden watering flow meter as defined above; and
   ii) a flow sensor arrangement provided separately from the first garden watering flow meter.

The garden watering flow meter system may be arranged so that the control arrangement of the first garden watering flow meter is arranged to control operation of the drive arrangement of the first garden watering flow meter in dependence on a flow rate determined by one of:
i) the control arrangement of the at least one further garden watering flow meter using the flow sensor of the at least one further garden watering flow meter; and
ii) the flow sensor arrangement provided separately from the first garden watering flow meter.

In such a case, the control arrangement of the first garden watering flow meter may be arranged to delay moving the valve of the first garden watering flow meter to the open state and/or to move the valve of the first garden watering flow meter from the open state to the closed state if the flow rate determined at the at least one further garden watering flow meter or flow sensor arrangement is below a predetermined threshold level.

Similarly, in such a case, the control arrangement of the first garden watering flow meter may be arranged to receive delayed watering input signals causing delay in moving the valve of the first garden watering flow meter to the open state and/or to move the valve of the first garden watering flow meter from the open state to the closed state if the flow rate determined at the at least one further garden watering flow meter or flow sensor arrangement is below a predetermined threshold level.

This can allow staggering or delay of watering in a system with a plurality of flow sensors, say a plurality of garden watering flow meters, where there is insufficient flow to feed all of the outlets simultaneously.

Note that, in general terms and with any necessary modifications in wording, all of the further features defined above following any aspect of the invention above are applicable as further features of all other aspects of the invention defined above. These further features are not restated after each aspect of the invention merely for the sake of brevity.

Embodiments of the present invention will now be described, by way of example only, with reference to the accompanying drawings in which:
Figure 1 schematically shows garden watering arrangement;
Figure 2 schematically shows a garden watering flow meter of the garden watering arrangement shown in Figure 1;
Figure 3 schematically shows internal components of the garden watering flow meter of Figure 2;
Figure 4 schematically shows an alternative user interface portion which may be provided on a garden watering flow meter of the type shown in Figures 2 and 3;
Figure 5A schematically shows a first alternative garden watering flow meter as part of a first alternative garden watering arrangement;
Figure 5B schematically shows a second alternative garden watering flow meter as part of a second alternative garden watering arrangement;
Figure 6 schematically shows part of a garden watering flow meter system comprising two garden watering flow meters and a client device arranged under the control of software for controlling the garden watering flow meters; and
Figures 7A and 7B schematically show user input and data display screens at the client device.

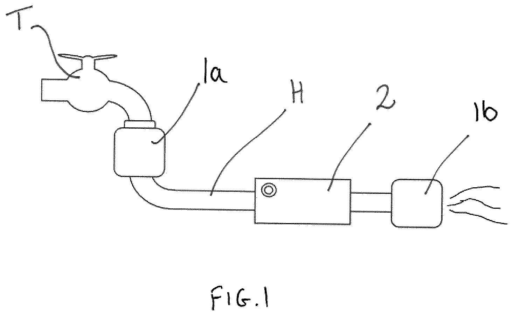

Figures 1 schematically shows a garden watering arrangement comprising a hose H connected to a water supply, a tap T in this instance, via a hose fitting 1a, and having a water outlet portion, which in this instance is a second hose fitting 1b.

The garden watering arrangement further comprises a garden watering flow meter 2 connected in-line in the hose H.

The garden watering flow meter 2 is provided for use in measuring and controlling the flow of water in garden watering arrangement, in particular through the hose H in this embodiment.

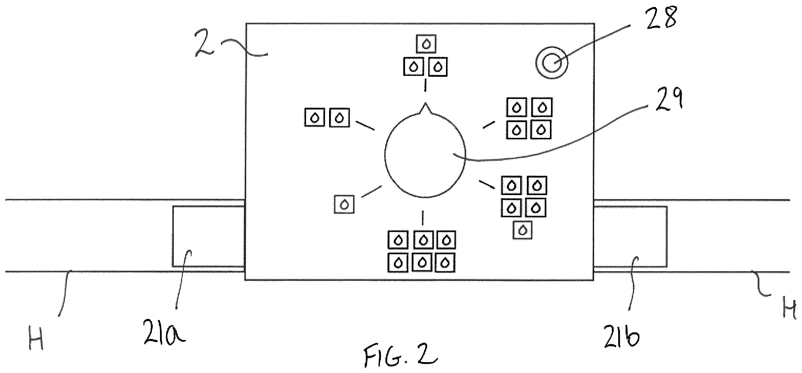

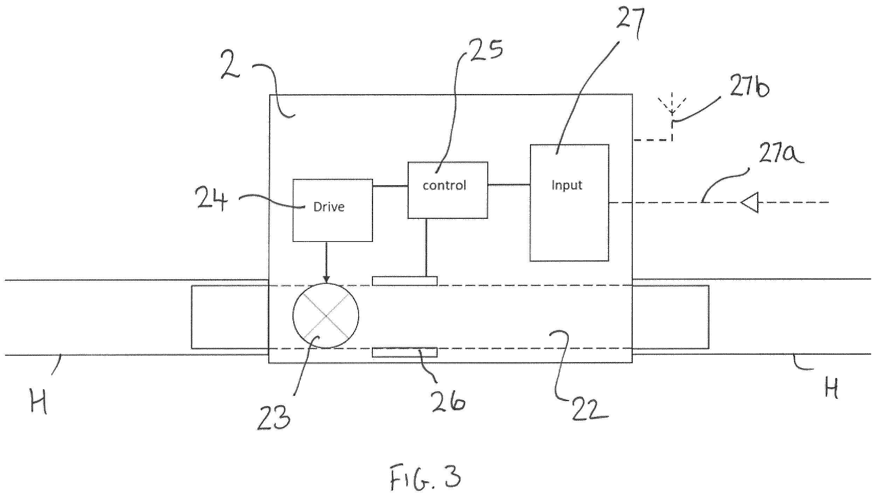

Figures 2 and 3 show the garden watering flow meter 2 in more detail.

The garden watering flow meter 2 comprise a first hose connection portion 21a and a second hose connection portion 21b each for accepting a respective end portion of the hose H.

The detail of the hose connection portions 21a, 21b is omitted from the drawings but each may comprise a hose receiving portion in which is disposed a spigot for receiving the end of a length of hose; and a clamping arrangement comprising a locking nut and a plurality of deformable claws which surround the spigot and are arranged to be driven into contact with hose carried on the spigot under action of the locking nut such that a carried hose is clampable between the claws and the spigot.

As seen in Figure 3, a fluid communication path 22 is provided through the garden watering flow meter 2 between the hose connection portions 21a, 21b, such that one of the hose connection portions acts as an inlet and one as an outlet.

The flow meter comprises a valve 23 for controlling flow through the fluid communication path 22 between the hose connection portions and a drive unit 24 is provided for driving the valve 23 between an open position which allows flow through the fluid communication path - ie throw the flow meter - and a close position which blocks such flow.

The flow meter comprises a control unit 25 to control overall operation of the flow meter including the drive unit 24 and hence the valve 23.

A flow sensor 26 is provided for sensing and measuring flow through the fluid communication path 22. An output of the flow sensor 26 acts as an input to the control unit 25.

The flow meter comprises an input section 27 for accepting external control inputs from a user.

The valve 23, drive unit 24, control unit 25, flow sensor 26 and input section 27 act together as a control arrangement for controlling flow through the fluid communication path 22.

In the present embodiment the control inputs come from controls provided on the flow meter as will be explained in more detail below.

In alternatives, as indicated in dotted lines in Figure 3, external inputs might be received via a physical, say wired connection 27a or wirelessly via an antenna 27b.

In the present embodiment the flow meter 2 comprises and on-off and start button 28 and a liquid volume to be delivered knob, or dial 29.

Although not shown in the drawings, it will be appreciated that the flow meter 2 also comprises a power source such as a battery.

In operation the flow meter 2 is usable by a user to control the volume of water delivered through the flow meter 2 and hence through the hose H with the arrangement of Figure 1.

The knob 29 is moveable between 6 positions in the present embodiment, each corresponding to a different volume of water for delivery. In the present embodiment the volumes at each position are schematically represented in multiples of a basic unit of water for delivery. The basic unit might for example be 1 litre, or 5 litres or 1 gallon.

In an alternative the symbols used on the dial might be watering can symbols, with position one corresponding to the delivery of one watering can of water (say 5 litres), position two corresponding to the delivery of two watering cans and so on. This can provide a very simple and intuitive control for the user.

The on-off and start button 28 may be used to turn the flow meter 2 on and to start measuring delivery of water.

An example mode of operation/button press pattern may be:
i) The button 28 is pressed so the unit is off (say a long press) - valve 23 is open - no measuring or control happens;
ii) The button 28 is pressed so the unit is on (say a long press) - valve 23 is open - measuring begins by virtue of the control unit 25 receiving input from the flow sensor 26 and calculating volume delivered. Watering continues until volume delivered reaches volume indicated via the knob 29, then the control unit 25 causes closing of the valve 23 and water delivery stops;
iiia) If in this state button 28 is pressed to turn unit off (say a long press), the valve 23 is reopened and unit turns off;
iiib) If in this state button 28 is pressed to reset (say a short press), the valve 23 is reopened and water delivery continues for the volume indicated via the knob 29 at that stage.

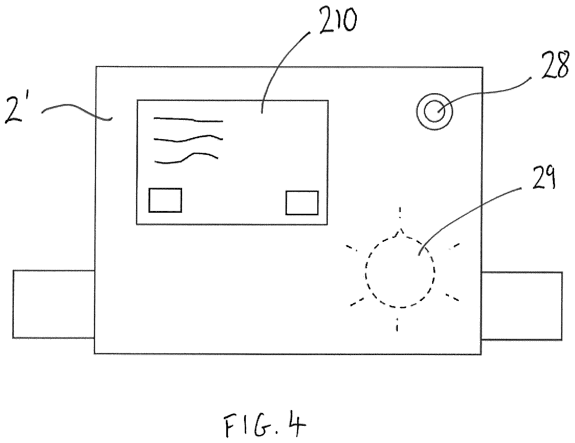

A modified version of the flow meter 2' is shown in Figure 4. This version of the flow meter 2' may include all of the features and functionality of the flow meter 2 of Figures 1 to 3 and also comprises a display screen 210, say an LCD display screen, for giving indications to the user.

These indications may, for example, include one or more of:
instantaneous flow rate,
accumulated volume since a last start,
accumulated volume in the last day, week, month, year or other selected period,
unit battery level,
valve open/closed state.

In some instances the display screen 210 may also be arranged to accept user input which can be fed to the input section 27. In such a case the knob 29 and/or the button 28 might be dispensed with if desired - that is the device might be arranged to allow via screen inputs regarding one or more of: on-off, start, reset, selected volume of water for delivery, etc.

The above described garden watering flow meters 2, 2' are designed as in-line flow meters to be provided in a length of hose H. However this is not essential and the present ideas and principles are equally applicable to garden watering flow meters arranged in different forms.

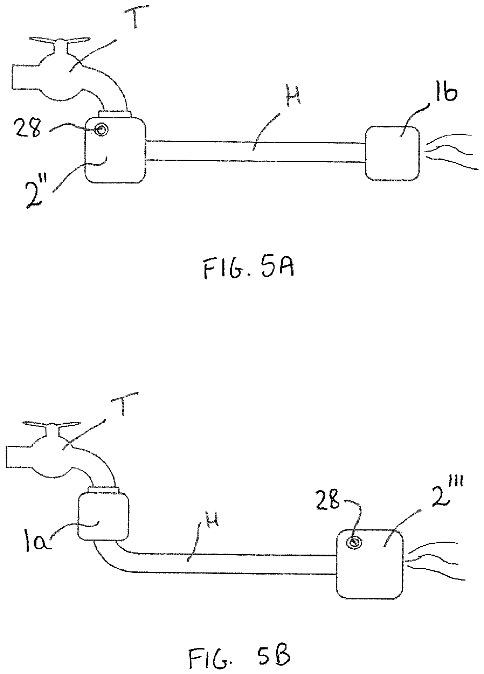

Figures 5A and 5B show two alternative garden watering arrangements. In these alternative garden watering flow meters 2", 2‴ are provided. These each can have the same overall arrangement, components and function of either of the flow meters 2, 2' described above (and thus detailed description of these parts is omitted), but they are arranged for provision in a different position in the garden watering arrangement.

The alternative garden watering flow meter 2" of Figure 5A is arranged as a tap mountable flow meter. This may be arranged to be mounted directly to a tap T or via an appropriate adaptor.

The alternative garden watering flow meter 2‴ of Figure 5B is arranged as a flow outlet flow meter. This may be arranged to be mounted directly to a hose end or via an appropriate adaptor.

Either or both of the alternative garden watering flow meter 2" of Figure 5A and the alternative garden watering flow meter 2‴ of Figure 5B might be built into an integral hose fitting. That is a hose fitting may be provided that incorporates the present type of flow meter. Although not shown in detail such a hose fitting may include a hose connector portion on which a hose is mountable and a connector mounting portion for accepting a connector portion of a component to be connected to the hose fitting.

In such a case, in some examples, the hose connection portion will comprise: a hose receiving portion in which is disposed a spigot for receiving the end of a length of hose; and
a clamping arrangement comprising a locking nut and a plurality of deformable claws which surround the spigot and are arranged to be driven into contact with hose carried on the spigot under action of the locking nut such that a carried hose is clampable between the claws and the spigot.

In such a case, in some examples, the connector mounting portion will comprise part of a push fit connector system for accepting and retaining a part of the connector portion of a component to be connected to the hose fitting. The connector mounting portion may comprise the female part of push fit connector system, such as a "quick-connect" system widely used in Europe and elsewhere, for accepting a corresponding male part on another component.

Thus such a fitting may comprise the female parts of a quick-connect connection system - ie at least one of:
a bore arranged to accept the male part;
a plurality of engaging fingers arranged to move resiliently between an extended position for capturing the male part and a retracted position allowing insertion and removal of the male part in the receiving bore; and
a release mechanism for releasing the two parts, which when operated retracts the engaging fingers so that the male part may be removed.

As alluded to above in some instances the present garden watering flow meters 2, 2', 2", 2‴ may be arranged for wireless connection to external devices.

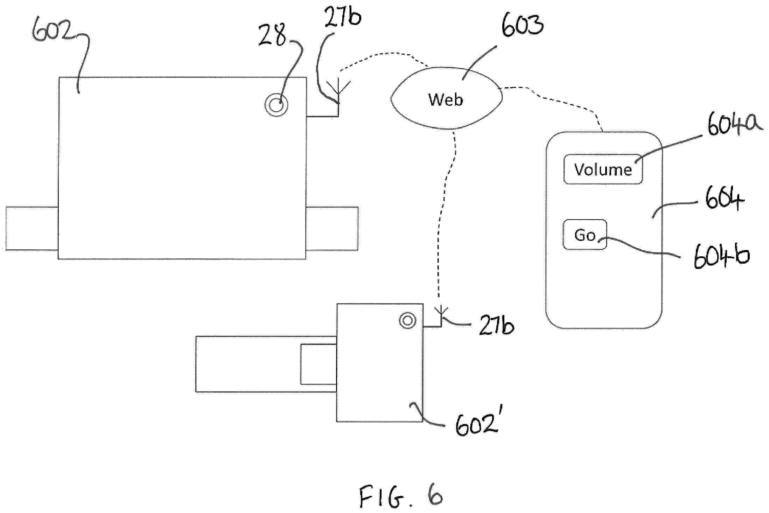

Figure 6 schematically shows a garden watering system which comprises two garden watering flow meters 602, 602' which are of the above described type and are arranged for wireless communications over one or more network 603 with a client device 604.

The features in common between the flow meters 602, 602' of Figure 6 and those of Figures 1 to 5 are not described for the sake of brevity, but it should be noted that those features are present unless specifically mentioned otherwise.

A first of the flow meters 602 is arranged as an in-line flow meter similar to that of Figures 1 to 3, in this case however the control knob is dispensed with as user control is provided via the client device 604.

A second of the flow meters 602' is arranged as a fitting similar to that of Figure 5B. Again the control knob is dispensed with as user control is provided via the client device 604.

In each case in the system of Figure 6 the flow meters 602, 602' includes an antenna 27b and the input section 27 (not visible in Figure 6) will comprise a communications module including a transceiver.

The flow meters 602, 602' comprise an on-off button 28 as in the flow meters described above but no other "on device" controls nor a display screen. Of course a screen and/or further controllers can be provided "on-device" if desired but they are not required and omitting these provides a simpler device and helps in making the device smaller as may be particularly helpful where the device is arranged as a fitting.

As alluded to above, in this case, control of each of the flow meters 602, 602' is provided via the client device 604. Typically the client device 604 will be a mobile phone or other web enabled device running software supporting communications and providing a web client allowing control of the flow meters 602, 602' - say a browser loaded with a webpage delivered for the purpose of allowing control of the flow meters 602, 602' or an "App" provided for the purpose of allowing control of the flow meters 602, 602' installed on the client device 604.

In the present case, the client device 604 is arranged under the control of software to allow a user to provide an input 604a indicating a selected volume of water for delivery and an input 604b to start water delivery.

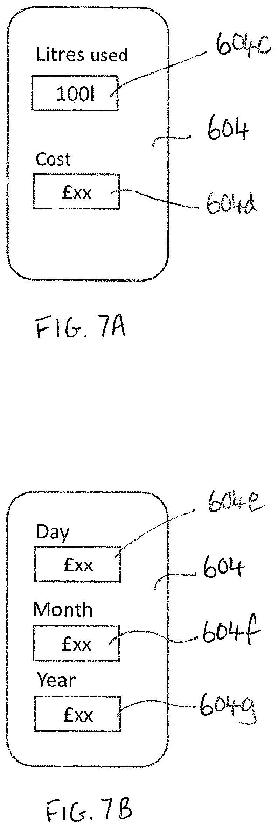

Further, the client device 604 is arranged under the control of software to allow a user to provide an input representing a unit cost for water and is arranged - see Figure 7A - to display a volume of water delivered 604c and a cost of the water 604d. Further screens may be provided - see Figure 7B - for indicating cost of water in the last day 604e, Month 604f, Year 604g and so on.

In a development of the present ideas, not shown in the drawings, a garden watering flow meter system may be provided comprising:
a first garden watering flow meter 2 of the type described above;
and at least one of:
   i) at least one further garden watering flow meter 2 of the type described above; and
   ii) a flow sensor arrangement provided separately from the first garden watering flow meter 2 for measuring flow at a particular point in the system.

Typically there might be a plurality of garden watering flow meters 2 provided. Perhaps each associated with a respective water outlet device such as a sprinkler.

In such a case there may be a difficultly that there is insufficient flow, at least at some times, to adequately feed each of the water outlet devices (which may be desirable say to maximise the coverage given by a respective sprinkler).

Correspondingly the garden watering flow meter system may be arranged to accommodate such an issue by allowing control of water delivery based on available flow rate.

One way to achieve this may be to control each garden watering flow meter 2 based on a flow rate that it senses. A potentially more sophisticated way to address this issue is to more co-operatively or centrally control the garden watering flow meters 2.

So in some cases the control arrangement of the garden watering flow meter 2 may be arranged to control operation of its drive arrangement in dependence on a flow rate determined by the control arrangement using the flow sensor and may be arranged to delay moving the valve 23 to the open state and/or to move the valve 23 from the open state to the closed state if the determined flow rate is below a predetermined threshold level.

This can facilitate the staggering or delaying of water delivery to a more suitable time - ie when a greater flow rate is available.

In addition or in alternative the control unit 25 may be arranged to accept a delayed watering input received via the communication module. This may be used to delay opening of the valve 23 or cause closing of the valve 23 in suitable circumstances.

In further alternatives, then in addition or alternative, the garden watering flow meter system may be arranged so that the control arrangement of the first garden watering flow meter is arranged to control operation of the drive arrangement of the first garden watering flow meter in dependence on a flow rate determined by one of:
i) the control arrangement of the at least one further garden watering flow meter using the flow sensor of the at least one further garden watering flow meter; and
ii) the flow sensor arrangement provided separately from the first garden watering flow meter.

In such a case, the control arrangement of the first garden watering flow meter may be arranged to delay moving the valve of the first garden watering flow meter to the open state and/or to move the valve of the first garden watering flow meter from the open state to the closed state if the flow rate determined at the at least one further garden watering flow meter or flow sensor arrangement is below a predetermined threshold level.

Similarly, in such a case, the control arrangement of the first garden watering flow meter may be arranged to receive delayed watering input signals causing delay in moving the valve of the first garden watering flow meter to the open state and/or to move the valve of the first garden watering flow meter from the open state to the closed state if the flow rate determined at the at least one further garden watering flow meter or flow sensor arrangement is below a predetermined threshold level.

This can allow staggering or delay of watering in a system with a plurality of water outlets and a plurality of flow sensors, say a plurality of garden watering flow meters, where there is insufficient flow to feed all of the outlets simultaneously.

Delayed watering inputs as mentioned above, might be received from other garden watering flow meters 2, from a client device 604, and/or from a system central control unit. The inputs might be arranged to cascade operation of the associated garden watering flow meters 2, ie closing the valve 23 in one and opening the valve 23 in the next one on an so on. This may in turn help maximise coverage from each associated water outlet - say each of a number of sprinklers.

## Claims

1. A garden watering flow meter comprising an inlet for accepting water, an outlet for outputting water, a flow communication path between the inlet and the outlet, and a flow sensor for sensing flow into, in, or out of, the flow communication path, wherein the flow meter further comprises a control arrangement for controlling the flow between the inlet and the outlet, the control arrangement comprising a valve moveable between an open state which allows flow in the a flow communication path between the inlet and the outlet and a closed state which obstructs flow between the inlet and the outlet, a drive arrangement for driving the valve between the open and closed states, and a control unit for controlling operation of the drive arrangement in dependence on an output from the flow sensor.

2. A garden watering flow meter according to claim 1 in which the control arrangement is arranged to determine, using an output of the flow sensor, a volume of fluid delivered by the flow meter.

3. A garden watering flow meter according to claim 1 or claim 2 in which the control arrangement is arranged to control operation of the drive arrangement in dependence on a volume of fluid delivered by the flow meter as determined by the controller arrangement using the flow sensor.

4. A garden watering flow meter according to any preceding claim in which the control unit is arranged to accept an input defining a user selected volume of fluid for delivery.

5. A garden watering flow meter according to claim 4 in which the control unit is arranged to determine a volume of fluid delivered by the flow meter after a start point and cause the drive arrangement to drive the valve to the closed state when the determined volume of fluid delivered reaches or exceeds the user selected volume of fluid as specified by the accepted input.

6. A garden watering flow meter according to claim 5 in which the start point is defined by receipt of a start input at the control unit, optionally wherein, the garden watering flow meter comprises a manually operably control, such as a button, usable by a user to provide a start input to the control unit.

7. A garden watering flow meter according to any preceding claim in which the garden watering flow meter comprises a manually operably control, moveable between a plurality of positions, such as a dial or knob, and usable by a user to provide a selected volume of fluid for delivery input to the control unit, with each of the plurality of positions corresponding to a respective mutually different selected volume of fluid for delivery, optionally wherein the units of volume indicated for selection by a user are presented in terms of a number of watering cans.

8. A garden watering flow meter according to any preceding claim which comprises a display screen for indicating information to a user, optionally wherein the display screen is arranged to accept user input.

9. A garden watering flow meter according to any preceding claim which comprises a wireless communication module for allowing communication between the controller and a separate device, optionally wherein at least one of:
i) the control unit is arranged to accept an input defining a user selected volume of fluid for delivery received via the communication module; and
ii) the control unit is arranged to accept a start input received via the communication module.

10. A garden watering flow meter according to any preceding claim which is tap mountable.

11. A garden watering flow meter according to any one of claims 1 to 10 which is connectable in-line between two lengths of hose.

12. A garden watering flow meter according to any one of claims 1 to 10 which is arranged as a hose end component for provision at the end of a hose and which comprises a hose connector portion on which a hose is mountable.

13. A garden watering flow meter according to claim 12 which is arranged as a hose fitting which comprises a connector mounting portion for accepting a connector portion of a component to be connected to the hose fitting.

14. A garden watering flow meter system comprising:
a garden watering flow meter according to any one of claims 1 to 13;
a client device arranged under the control of software for communication via a network with the garden watering flow meter and for accepting user inputs which cause control of the garden watering flow meter.

15. A client device arranged under the control of software for communication via a network with a garden watering flow meter according to any one of claims 1 to 13 and for accepting user inputs which cause control of the garden watering flow meter.

16. A computer program comprising code portions which when loaded and run on a web enabled computer device cause the computer device to operate as a client device according to claim 15.
